# EUROPÄISCHE PATENTSCHRIFT

(11) **EP 1 472 844 B1**
(45) Veröffentlichungstag und Bekanntmachung des Hinweises auf die Patenterteilung: **13.09.2006**
(21) Anmeldenummer: 03704289.2
(22) Anmeldetag: 04.02.2003
(51) Int. Cl.: H04L 27/20

(54) **TAKTSTEUERUNG UND ABTASTRATENUMSETZUNG IM SENDER EINES DIGITALEN TRANSCEIVERS**
CLOCK CONTROL AND SAMPLING RATE CONVERSION IN THE TRANSMITTER OF A DIGITAL TRANSCEIVER
COMMANDE D'HORLOGE ET CONVERSION DE LA FREQUENCE D'ECHANTILLONAGE DANS L'EMETTEUR D'UN EMETTEUR-RECEPTEUR NUMERIQUE

(30) Priorität: 08.02.2002 DE 10205305
(43) Veröffentlichungstag der Anmeldung: 03.11.2004
(73) Patentinhaber: Infineon Technologies AG, 81669 München (DE)
(72) Erfinder: DENK, Robert, 85567 Grafing (DE); WENZEL, Dietmar, 81549 München (DE); WÜRTH, Robert, 81827 München (DE)
(74) Vertreter: Graf Lambsdorff, Matthias
(86) Internationale Anmeldenummer: PCT/DE2003/000309
(87) Internationale Veröffentlichungsnummer: WO 2003/067793

(56) Entgegenhaltungen:
- SENST A; FOCK G; MEYR H: "Rate Conversion for Arbitrary Sampling Rates in the Transmit Path of a Digital Transceiver" GLOBAL TELECOMMUNICATIONS CONFERENCE, 2001, GLOBECOM '01, Bd. 6, 25. - 29. November 2001, Seiten 3658-3662, XP002246734 San Antonio, TX, USA
- MEYR H; MOENECLAEY M; FECHTEL S A: "Digital Communications Receivers. Synchronization, Channel Estimation and Signal Processing" 1998 , WILEY & SONS , NEW YORK, NY, USA XP002246735 ISBN: 0-471-50275-8 Seite 225 -Seite 232

## Beschreibung

Die vorliegende Erfindung bezieht sich generell auf das Gebiet der Mobilkommunikation und auf die Erzeugung von Mobilkommunikations-Sendesignalen für unterschiedliche Mobilfunkstandards. Insbesondere betrifft die Erfindung dabei eine Vorrichtung und ein Verfahren zur Taktsteuerung von Sendesignal-Verarbeitungseinrichtungen in Mobilfunk-Endeinrichtungen wie Mobilstationen und Basisstationen nach dem Oberbegriff der jeweiligen unabhängigen Patentansprüche.

Bei dem derzeit in der Mobilkommunikation verwendeten GSM-Standard wird die sogenannte GMSK-(Gaussian Minimum Shift Keying)Modulation eingesetzt, die einen Signalraum mit Signalpunkten verwendet, die eine Phasendifferenz von 180° aufweisen. Dazu wurde der Paketdienst GPRS (General Paket Radio Service) entwickelt, bei dem mit höheren Datenraten gearbeitet werden kann. Als weiterer derzeit benutzter Standard ist der TIA/EIA-136-(IS-136-)Standard bekannt, bei welchem ein π/4-DQPSK-(D-Quarternär-PSK)-Modulationsverfahren für die Erzeugung der Sendesignale eingesetzt wird. Gewissermaßen als Übergangsstandard zwischen GSM und GPRS einerseits und UMTS andererseits wurde der Standard EDGE sowie der zugehörige Paketdienst EGPRS(Enhanced GPRS) definiert. Bei EDGE handelt es sich zwar noch um ein TDMA-Verfahren (Time Division Multiple Access), es wird aber bereits von der GMSK-Modulation auf die 8-PSK-Modulation übergegangen. Bei der 8-PSK-Modulation wird ein Signalraum mit acht Signalpunkten verwendet, wobei die Phasendifferenz zwischen den einzelnen Signalpunkten 45° beträgt. UMTS dagegen verwendet das CDMA-Verfahren (Code Division Multiple Access) (auch in Kombination mit TDMA und/oder FDMA), bei welchem die Signale jeder Funkverbindung mit einem jeweils eigenen Code, dem sogenannten Spreizcode verschlüsselt werden.

Ein generelles Ziel besteht darin, Mobilkommunikationsgeräte zu entwickeln, die für den Betrieb mit mehreren verschiedenen Mobilfunkstandards ausgelegt sind und die demnach in den verschiedenen Mobilfunksystemen benutzt werden können. Ein Problem stellt jedoch hierbei die Tatsache dar, dass die oben beschriebenen Modulationsverfahren auf unterschiedlichen Symboltaktfrequenzen beruhen, die nicht durch ganzzahlige Faktoren oder einfache rationale Verhältnisse ineinander überführbar sind. Demzufolge sind üblicherweise mindestens zwei unterschiedliche Systemtakte erforderlich, die in der Regel von separaten Quarzoszillatoren abgeleitet werden.

Bisherige Sendevorrichtungen für kombinierte UMTS- und GSM/EDGE-Anwendungen verfügen somit ausschließlich über mehrere Quarze oder PLL-Schaltungen (Phase Locked Loop), welche genau auf den jeweiligen Standard abgestimmte Systemtaktfrequenzen liefern, die in der Regel ein ganzzahliges Vielfaches der inversen Symboldauer des Übertragungsverfahrens sind. Die Architektur der Signalverarbeitungsketten ist starr an diese Frequenzen gebunden. Sowohl der physikalische Arbeitstakt als auch der physikalische Abtasttakt sind somit in diesen Sendevorrichtungen nicht unabhängig von der standardspezifischen digitalen Signalverarbeitung, insbesondere von der standardspezifischen Symboldauer.

In der deutschen Offenlegungsschrift DE 100 45 547 A1 "Verfahren zur systemunabhängigen digitalen Erzeugung von Mobilkommunikations-Sendesignalen verschiedener Mobilfunkstandards" wird ein verwandtes Verfahren beschrieben, das jedoch beispielsweise nicht für die speziellen Anforderungen des UMTS-Standards ausgelegt ist und insbesondere die Eigenschaft aufweist, dass es nicht nur einen einzigen Quarzoszillator benutzt, sondern auch denselben Digital-Analog-Wandler (DAC) und andere Schaltungskomponenten für mehrere Standards gemeinsam nutzt, sowie den DAC auch mit derselben Abtastfrequenz für alle Standards betreibt, was beispielsweise für ein System, das die Standards UMTS und GSM/EDGE unterstützt, nicht vorteilhaft ist.

Die Druckschrift "Rate Conversion for Arbitrary Sampling Rates in the Transmit Path of a Digital Transceiver ", Global Telecommunications Conference, 2001, Globecom '01, Band 6, Seiten 3658-3662 beschreibt eine Vorrichtung gemäß dem Oberbegriff des Anspruchs 1. Es ist somit Aufgabe der vorliegenden Erfindung, ein Verfahren und eine Vorrichtung zur Taktsteuerung von Sendesignal-Verarbeitungseinrichtungen in Mobilfunk-Endeinrichtungen wie Mobilstationen oder Basisstationen anzugeben, welche hinsichtlich der Anforderungen möglichst vieler Mobilfunkstandards ausgelegt sind und insbesondere für ein System geeignet sind, das die Standards UMTS und GSM/EDGE unterstützt.

Diese Aufgabe wird durch eine Vorrichtung und ein Verfahren gemäß der kennzeichnenden Merkmale der unabhängigen Patentansprüche gelöst. Vorteilhafte Ausgestaltungen und Weiterbildungen sind in den Unteransprüchen angegeben.

Ein wesentlicher Gedanke der Erfindung liegt in dem Einsatz eines Abtastratenumsetzers, der neben der eigentlichen Signalumsetzung zusätzlich eine Steuerinformation ausgibt, die dazu geeignet ist, Signalverarbeitungskomponenten, die im Signalfluss vor dem Abtastratenumsetzer angeordnet sind, im Mittel exakt mit der virtuellen Abtastfrequenz zu betreiben, obwohl die virtuelle Abtastfrequenz in der Vorrichtung nicht notwendigerweise als physikalischer Arbeitstakt zur Verfügung steht. Der Abtastratenumsetzer setzt die in dem virtuellen Zeitraster vorliegenden Abtastwerte in Abtastwerte des physikalischen Abtastrasters des Digital-Analog-Umsetzers um und gibt ein Steuersignal aus, mit Hilfe dessen eine Taktsteuerung ein Signal erzeugt, das im Mittel eine Flankenhäufigkeit besitzt, die exakt der virtuellen Abtastfrequenz, insbesondere einem ganzzahligen Vielfachen der virtuellen Abtastfrequenz entspricht.

Im Folgenden wird unter den Begriffen
"Abtastfrequenz" die Taktfrequenz, mit der ein Digital-/Analog-Umsetzer (DAC) oder ein Analog-/Digital-Umsetzer (ADC) betrieben wird oder betrieben werden müsste, um ein Signal aus der digitalen in die analoge Domäne umzusetzen (oder umgekehrt),
"Abtastrate" die Anzahl der Abtastwerte eines zeitdiskreten Signals pro Zeiteinheit, gemittelt über einen definierten Zeitraum,
"Abtastraster" die periodische Struktur, in der Abtastwerte eines zeitdiskreten Signals in einem definierten Abstand bezogen auf eine frei wählbare Bezugsgröße (Länge, Zeit, etc.) angeordnet sind, verstanden.

Die Erfindung ermöglicht - gegebenenfalls im Zusammenhang mit in den Unteransprüchen angegebenen Weiterbildungen - die folgenden Vorteile.

Die Sendevorrichtung wird nur mit einem einzigen Quarzoszillator bzw. nur einem Systemtakt betrieben, der für die Verarbeitung von Signalen aller unterstützten Standards verwendet wird. Dieser Systemtakt oder ein aus diesem durch einen Phasenregelkreis (PLL, Phase Locked Loop) abgeleiteter Takt wird als physikalischer Abtasttakt des DACs im Sendepfad verwendet (physikalischer Abtasttakt). Derselbe Takt oder ein weiterer aus dem Systemtakt durch einen Phasenregelkreis oder einen Taktteiler abgeleitete Takt wird als physikalischer Arbeitstakt für die digitalen Schaltungskomponenten im Sendepfad verwendet (physikalischer Arbeitstakt).

Die in diesem Zusammenhang einzige Anforderung an die Frequenz des physikalischen Arbeitstaktes ist, lediglich sicherzustellen, dass er unter Berücksichtigung der zur Verfügung stehenden Schaltungsressourcen ausreichend schnell ist, um die für eine Echtzeitverarbeitung erforderliche Rechenleistung zu erreichen. Die wichtigste Anforderung an die Frequenz des physikalischen Abtasttaktes ist, lediglich sicherzustellen, dass sie ausreichend hoch ist, um das Abtasttheorem einzuhalten oder einen gewünschten Überabtastungsfaktor zu erreichen.

Die durch eventuell eingesetzte PLLs aus dem Quarzoszillator abgeleiteten Takte werden durch vergleichsweise einfache PLL-Teilerfaktoren erreicht, die eine günstige Gestaltung der PLL erlauben, aber nicht notwendigerweise auf den zusätzlich zu unterstützenden Standard abgestimmt sind.

Die standardspezifische digitale Signalverarbeitung (z.B. Operationen auf Chip-Ebene bei UMTS-Signalen) kann auf Abtastrastern beruhen, die unabhängig vom Zeitraster des Systemtaktes und/oder unabhängig vom Zeitraster des physikalischen Arbeitstaktes der digitalen Schaltungskomponenten und/oder unabhängig vom Zeitraster des physikalischen Abtasttaktes sind.

Die zu den Abtastrastern gehörigen Abtastraten bzw. Abtastfrequenzen, welche für die standardspezifische Signalverarbeitung maßgeblich sind und speziell von den Parametern des Mobilfunkstandards abhängen, z.B. Chip-Periodendauer, Symbol-Periodendauer, usw., brauchen in der Anordnung physikalisch nicht aufzutreten. Es handelt sich dabei also um virtuelle Abtastfrequenzen.

Die Sendevorrichtung enthält mindestens einen Abtastratenumsetzer, insbesondere einen fraktionalen Abtastratenumsetzer (Sampling Rate Converter, SRC), der die Umsetzung des virtuellen Abtastrasters in das physikalische Abtastraster vornimmt. Der Abtastratenumsetzer liefert Steuerinformationen, welche zur Abbildung des virtuellen Abtastrasters auf das durch den Systemtakt vorgegebene Raster des physikalischen Arbeitstaktes verwendet werden kann. Dieser Steuerinformationsfluss ist entgegengesetzt zum Signalfluss gerichtet.

Die Abbildung des virtuellen Abtastrasters auf das Raster des physikalischen Arbeitstaktes erfolgt durch einfaches Ausblenden von Flanken des physikalischen Arbeitstaktes ("Clock Gating"). Die Rate der verbleibenden Flanken dieses Takts entspricht im Mittel genau der virtuellen Abtastrate (oder einem ganzzahligen Vielfachen der virtuellen Abtastrate).

Da die digitalen Schaltungskomponenten mit einem eigenen physikalischen Arbeitstakt arbeiten, der gegebenenfalls für die beiden Standards identisch gewählt werden kann, ist ein sogenanntes synchrones Design der Schaltung möglich.

Im Folgenden wird die Erfindung anhand von Ausführungsbeispielen im Zusammenhang mit den Zeichnungsfiguren näher erläutert. Es zeigen:
- Fig. 1: eine erste Ausführungsform einer erfindungsgemäßen Sendevorrichtung;
- Fig. 2: eine zweite Ausführungsform einer erfindungsgemäßen Sendevorrichtung;
- Fig. 3: ein Zeitdiagramm zur Darstellung der verschiedenen Signalverläufe;
- Fig. 4: eine Ausführungsform einer Taktsteuerungseinrichtung.

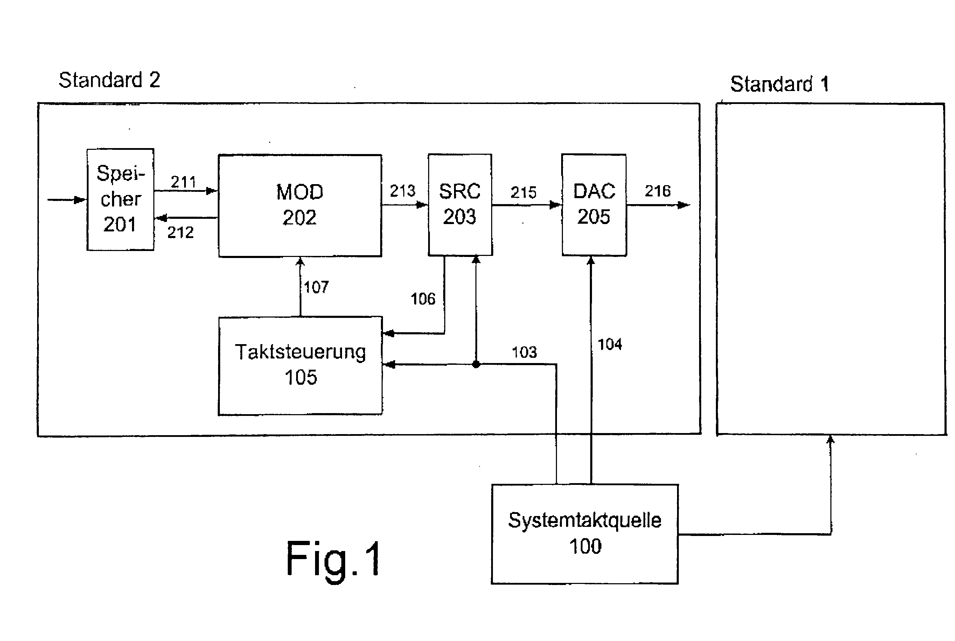

In der Fig. 1 ist eine allgemeine Ausführungsform einer erfindungsgemäßen Vorrichtung schematisch dargestellt. Diese weist eine Systemtaktquelle 100 mit genau einem Quarz auf, der für die Verarbeitung von Signalen mehrerer Standards verwendet wird. Die Systemtaktquelle 100 liefert mindestens einen physikalischen Arbeitstakt 103, der im einfachsten Fall identisch mit dem ebenfalls von der Systemtaktquelle 100 gelieferten physikalischen Abtasttakt 104 ist.

Weiterhin verfügt die erste Ausführungsform einer erfindungsgemäßen Vorrichtung gemäß Fig. 1 über einen Abtastratenumsetzer 203, der Abtastwerte 213, die in einem virtuellen Abtastraster vorliegen, entgegennimmt und diese in Abtastwerte 215, beruhend auf dem physikalischen Abtastraster des Digital-Analog-Umsetzers (DAC) 205, umsetzt. Der DAC 205 wird mit dem physikalischen Abtasttakt 104 betrieben und gibt ausgangsseitig das analoge Signal 216 aus.

Ferner liefert der mit dem physikalischen Arbeitstakt 103 betriebene Abtastratenumsetzer 203 ein Steuersignal 106, das einer Taktsteuerung 105 eingangsseitig zugeführt wird, die ebenfalls mit dem physikalischen Arbeitstakt 103 versorgt wird. Mit Hilfe des Steuersignals 106 generiert die Taktsteuerung 105 einen maskierten Takt 107, und zwar in der Weise, dass der Takt 107 im Mittel eine Flankenhäufigkeit besitzt, die exakt der virtuellen Abtastfrequenz der Abtastwerte 213 oder einem ganzzahligen Vielfachen davon entspricht.

Der maskierte Takt 107 wird dem Modulator 202 zugeführt, wobei der Modulator 202 korrespondierend zum virtuellen Abtasttakt Eingangsdaten 211 aus dem vorgeschalteten Speicher 201 mit Hilfe der Adress- und/oder Steuerinformationen 212 entnimmt.

Aufgrund des dem Signalfluss entgegengesetzt gerichteten Steuerinformationflusses 106 bzw. 212 kontrolliert der SRC 203 durch die von ihm selbst erzeugte Steuerinformation 106 die Zahl der Arbeitstakte pro Zeiteinheit der vorangehenden Signalverarbeitungsstufen 202 und bestimmt somit letztlich auch die Geschwindigkeit, mit der die Modulationsdaten 211 aus dem Speicher 201 ausgelesen werden. Der Speicher 201 bzw. eine ihm zugeordnete Steuereinheit kann von der vorangehenden Datenquelle weitere Daten anfordern, bevor der Speicher 201 leer läuft. Aufgrund dieses rückwärts gerichteten kettenartigen Kontrollflusses ist der Datendurchsatz des Sendepfads ausschließlich durch den physikalischen Abtasttakt 104 des DACs und das Umsetzungsverhältnis des SRC 203 bestimmt, nicht jedoch durch den physikalischen Arbeitstakt 103 der Signalverarbeitungsstufen.

Durch die Flexibilität der erfindungsgemäßen Anordnung hinsichtlich der Wahl des Systemtaktes kann zur Vereinfachung der Quarzoszillator und/oder der PLL passend zu den Eigenschaften und Anforderungen des ersten Standards gewählt werden, wobei lediglich darauf zu achten ist, dass damit auch eine für den zweiten Standard ausreichende Rechenleistung erzielt werden kann. Es muss jedoch keine Rücksicht auf die standardspezifische Symboldauer des zweiten Standards genommen werden, was ein sehr wesentlicher Vorteil bei der Erstellung eines Taktkonzepts zur Schaltungsrealisierung ist. Der Block zur Unterstützung des ersten Standards benötigt in diesem Fall üblicherweise keinen Abtastratenumsetzer.

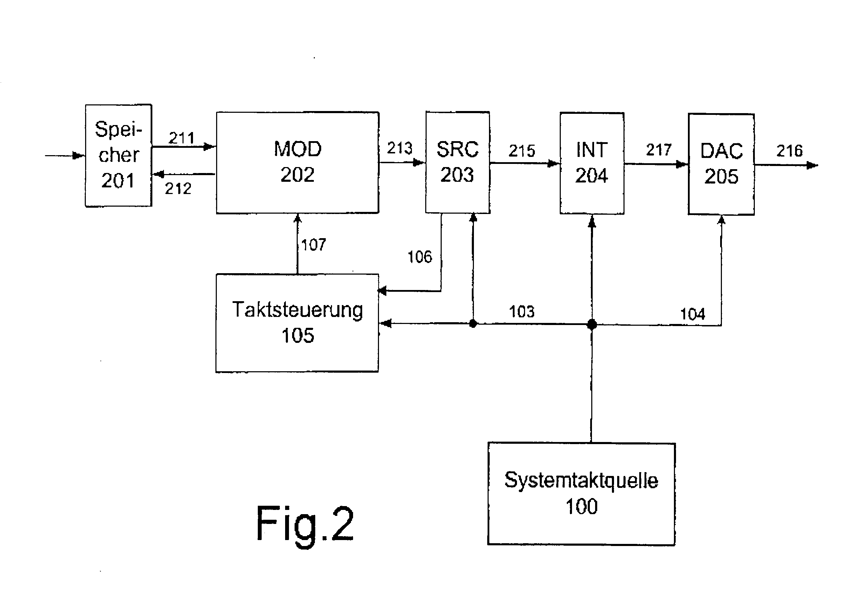

Die Anordnung gemäß der Fig. 1 weist im Übrigen noch die folgenden Besonderheiten auf.
a) Der physikalische Arbeitstakt 103 und der physikalische Abtasttakt 104 können verschieden voneinander sein; beispielsweise kann die Taktfrequenz des Arbeitstaktes 103 als ein ganzzahliges Vielfaches von der des Abtasttaktes 104 gewählt werden, um eine bessere Ausnutzung der Schaltungskomponenten des Modulators 202 und/oder des Abtastratenumsetzers 203 durch zeitlichen Multiplex zu erreichen.
b) Häufig ist es erwünscht, den DAC 205 mit einer gegenüber der Signalbandbreite wesentlich höheren Abtastfrequenz zu betreiben, um durch dieses große Überabtastungsverhältnis nur einen vergleichsweise einfachen Rekonstruktionstiefpass für die Gewinnung des analogen Signals 216 verwenden zu müssen. Um jedoch den Rechenaufwand und damit auch den Schaltungsaufwand im Modulator 202 und insbesondere im Abtastratenumsetzer 203 gering zu halten, d.h. dort ein der Signalbandbreite angepasstes Abtastraster bei den Signalen 213 und 215 zu verwenden, ist es in diesem Fall vorteilhaft, gemäß Fig. 2 einen Interpolator 204 mit festem ganzzahligem Umsetzungsverhältnis vor dem DAC 205 einzusetzen.
c) Besonders vorteilhaft können die Fälle a) und b) kombiniert werden, wenn im Fall b) wegen des großen Überabtastungsverhältnisses der hochfrequente Abtasttakt 104 auch als physikalischer Arbeitstakt 103 verwendet wird und zugleich der Vorteil aus Fall a) genutzt wird, Schaltungskomponenten (Addierer, Multiplizierer, ...) zeitlich zu multiplexen.

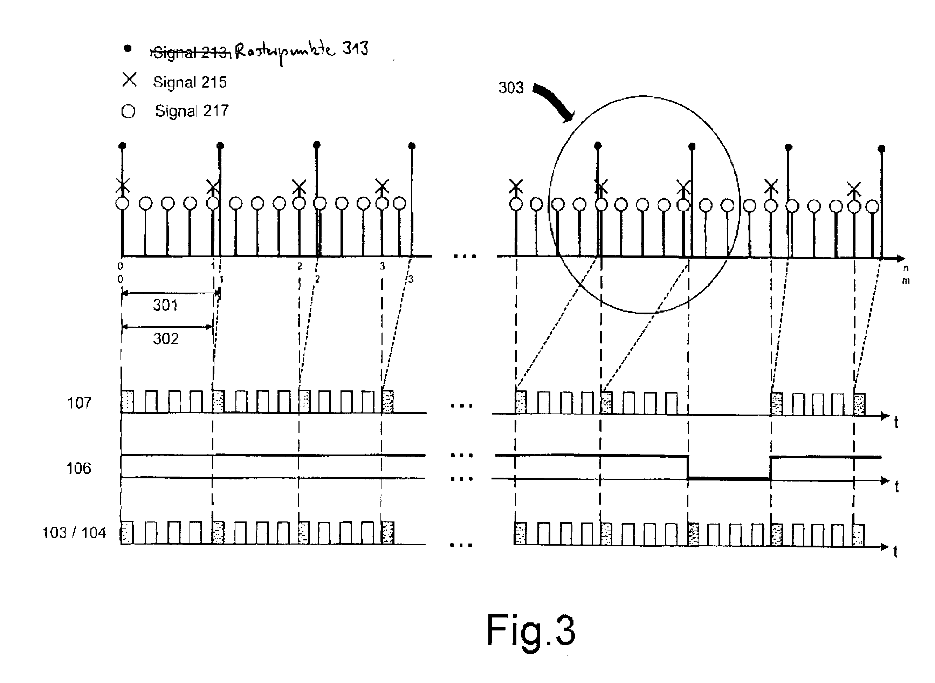

Fig. 3 zeigt den Zusammenhang zwischen physikalischem Arbeitstakt 103 bzw. physikalischem Abtasttakt 104 und maskiertem Arbeitstakt 107 sowie den Zusammenhang zwischen dem virtuellen Abtastraster und dem Abtastraster am Ausgang des Abtastratenumsetzers 203 als auch dem physikalischen Abtastraster des DACs 205.

Gemäß der Ausgestaltung nach dem obigen Abschnitt c) beträgt im vorliegenden Ausführungsbeispiel die Frequenz des Abtasttaktes 104 bzw. des Arbeitstaktes 103 das Vierfache der Ausgangsrate des Abtastratenumsetzers 203, und zwar insbesondere 65 MHz oder 62,4 MHz. Der Interpolator 204 hat dementsprechend den Interpolationsfaktor 4. Beide Frequenzen sind aus rationalen Vielfachen der GSM/EDGE-typischen Systemfrequenz von 13 MHz ableitbar (Faktor 5 oder 192/40), was dem 48-fachen der inversen Symboldauer eines GSM/EDGE-Symbols entspricht. Der Abtastratenumsetzer 203 hat dabei ein Umsetzungsverhältnis von Eingang zu Ausgang von 64/65 oder 1.536/1.625. Daraus resultiert in beiden Varianten eine virtuelle Abtastfrequenz des Signals 213 von 15,36 MHz, was exakt dem Vierfachen der UMTS-typischen inversen Symboldauer (3,84 MHz) entspricht und mit der Ausgangsrate des Modulators 202 korrespondiert, der üblicherweise für einen Überabtastungsfaktor von 4 ausgelegt ist.

Wie in Fig. 3 dargestellt ist, gibt der Abtastratenumsetzer mit jeder vierten Taktflanke des Arbeitstaktes 103 einen Abtastwert 215 aus (Index n). Zur Berechnung jedes Ausgangswertes stehen somit vier Arbeitstaktzyklen zur Verfügung, die für einen Zeitmultiplex von Schaltungsressourcen genutzt werden können. Ebenfalls sind in Fig. 3 die Abtastwerte des Eingangssignals 213, aus denen der Abtastratenumsetzer 203 die Abtastwerte des Ausgangssignals 215 errechnet, im virtuellen Abtastraster (Index m) dargestellt. Die eingangsseitigen Abtastwerte 213 werden zu den Zeitpunkten der steigenden Flanken der markierten Impulse des maskierten Taktes 107 in den Abtastratenumsetzer 203 übernommen.

Auch hier ist erkennbar, dass zunächst nur bei jedem vierten Arbeitstakt ein Wert vom Modulator 202 erzeugt werden muss, d.h. auch der Modulator 202 kann mit einem Multiplexfaktor von 4 betrieben werden.

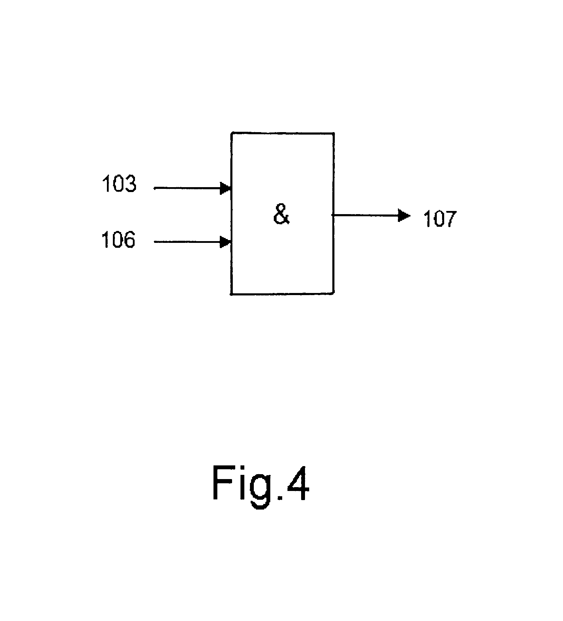

Da das virtuelle Abtastraster 301 etwas größere Perioden hat als das ausgangsseitige Abtastraster 302 des Umsetzers 203, treten jedoch Situationen (303) auf, in denen ein weiterer Ausgangswert 215 errechnet werden muss, ohne dass ein neuer Rasterpunkt 313 des virtuellen Abtastrasters zwischen zwei aufeinander folgenden Takten des physikalischen Abtastrasters liegt. Dies berücksichtigt der Abtastratenumsetzer 203 dadurch, dass er das Steuersignal 106 für die Dauer von vier aufeinander folgenden Arbeitstakten deaktiviert. Wird der physikalische Arbeitstakt 103 in der Taktsteuerungseinrichtung 105 durch eine UND-Verknüpfung mit dem Steuersignal 106 gemäß Fig. 4 logisch verknüpft, so erhält man gerade den maskierten Arbeitstakt 107, der den Modulator 202 genau zu diesen Zeitpunkten anhält, an denen kein neuer Abtastwert am Eingang des Abtastratenumsetzers 203 benötigt wird. Somit wird der Modulator 202 automatisch gerade so oft angehalten, dass er im Mittel die Abtastwerte exakt mit der virtuellen Abtastrate ausgibt.

Der Modulator 202 kann aufgrund der Ansteuerung mit dem maskierten Takt 107 hinsichtlich signalverarbeitungstechnischer Parameter, wie Filterkoeffizienten usw., vorteilhafter Weise so implementiert werden, als liefe er exakt mit der virtuellen Abtastfrequenz. Ist die virtuelle und ausgangsseitige Abtastfrequenz des Abtastratenumsetzers 203 nur geringfügig unterschiedlich, wie es im vorliegenden Ausführungsbeispiel der Fall ist (15,36 MHz und 15,6 MHz), so tritt die Situation (303) nur verhältnismäßig selten auf, d.h. der Modulator 202 wird nur vergleichsweise selten angehalten und es wird die schaltungstechnisch zur Verfügung stehende Rechenleistung fast vollständig genutzt.

Der Modulator 202 arbeitet selbst ebenfalls mit dem Überabtastungsfaktor 4, so dass er, wenn man den Multiplexfaktor 4 berücksichtigt, mit jeder 16. steigenden Flanke des maskierten Arbeitstaktes 107 einen Wert 211 aus dem Speicher 201 gesteuert durch das Signal 212 entnimmt. Der Modulator 202 und damit letztlich der Abtastratenumsetzer 203 bestimmen somit die mittlere Auslesegeschwindigkeit des Speichers 201. Wird der Speicher 201 durch eine Füllstandsregelung überwacht, so kann der Speicher 201 rechtzeitig mit neuen Modulationsdaten gefüllt werden. Auf diese Weise pflanzt sich der Steuerinformationsfluss, der letztlich die Datenrate der Übertragung regelt, fort.

## Patentansprüche

1. Vorrichtung zur Taktsteuerung von Sendesignal-Verarbeitungseinrichtungen in Mobilfunk-Endeinrichtungen, die zu einer Mehrzahl verschiedener Mobilfunkstandards kompatibel ist, mit
- einem Abtastratenumsetzer (203), einem Digital-Analog-Umsetzer (205), einer Taktsteuerungseinrichtung (105) und einem Modulator (202) zum Ausgeben von Abtastwerten (213) , wobei
- der Abtastratenumsetzer (203) Abtastwerte (213), die einem virtuellen Abtastraster zugehörig sind, in Abtastwerte (215) eines physikalischen Abtastrasters des Digital-Analog-Umsetzers (205) oder eines ganzzahligen Teilers daum und
- der Abtastratenumsetzer (203) ein erstes Steuersignal (106) ausgibt, **dadurch gekennzeichnet, dass** die Taktsteuerungseinrichtung (105) bei einem aktivierten ersten Steuersignal (106) auf Basis des physikalischen Abtastraters ein zweites Steuersignal (107) erzeugt und das zweite Steuersignal (107) dem Modulator (202) zuführt, und
- der Modulator (202) in Abhängigkeit von dem zweiten Steuersignal (107) einen dem virtuellen Abtastraster zugehörigen Abtastwert (213) ausgibt und damit den Abtastratenumsetzer (203) speist, wobei
- der Abtastratenumsetzer (203) das erste Steuersignal (106) derart ausgibt, dass das zweite Steuersignal (107) im Mittel eine Flankenhäufigkeit besitzt, die der virtuellen Abtastfrequenz oder einem ganzzahligen Vielfachen der virtuellen Abtastfrequenz entspricht, und wobei der Abtastratenumsetzer (203) das erste Steuersignal (106) deaktiviert, nachdem er feststellt, dass ein weiterer Ausgangswert (215) errechnet werden mass und zwischen zwei aufeinander folgenden Takten des physikalischen Abtastrasters kein Rasterpunkt (313) des virtuellen Abtastratrers liegt.

2. Vorrichtung nach Anspruch 1,
**dadurch gekennzeichnet, dass**
- sie eine Systemtaktquelle (100) mit genau einem Systemtaktoszillator besitzt.

3. Vorrichtung nach Anspruch 2,
**dadurch gekennzeichnet, dass**
- die Systemtaktquelle (100) einen physikalischen Arbeitstakt (103) für die Signalverarbeitungskomponenten sowie einen physikalischen Abtasttakt (104) für den Digital-Analog-Umsetzer (205) liefert, insbesondere unter Verwendung einer Phasenregelschleife (PLL).

4. Vorrichtung nach Anspruch 3,
**dadurch gekennzeichnet, dass**
- der physikalische Arbeitstakt (103) identisch mit dem physikalischen Abtasttakt (104) ist.

5. Vorrichtung nach Anspruch 3,
**dadurch gekennzeichnet, dass**
- das Zeitraster des physikalischen Abtasttaktes (104) des Digital-Analog-Umsetzers (205) und/oder das Zeitraster des Systemtaktes und/oder das Zeitraster des physikalischen Arbeitstaktes (103) unabhängig vom Abtastraster für die standardspezifische digitale Signalverarbeitung wählbar ist.

6. Vorrichtung nach Anspruch 1,
**dadurch gekennzeichnet, dass**
- das zweite Steuersignal (107) aus dem physikalischen Arbeitstakt (103) abgeleitet wird und synchrone Flanken zu diesem aufweist.

7. Vorrichtung nach Anspruch 6,
**dadurch gekennzeichnet, dass**
- das zweite Steuersignal (107) erzeugt wird, indem Flanken aus dem physikalischen Arbeitstakt (103) durch eine logische UND-Verknüpfung von physikalischem Arbeitstakt (103) und erstem Steuersignal (106) ausgeblendet werden.

8. Vorrichtung nach Anspruch 1,
**dadurch gekennzeichnet, dass**
- das zweite Steuersignal (107) als Arbeitstakt für die vor dem Abtastratenumsetzer (203) angeordneten Schaltungskomponenten verwendet wird.

9. Vorrichtung nach Anspruch 1,
**dadurch gekennzeichnet, dass**
- der den Datendurchsatz bestimmende Steuersignalfluss entgegengesetzt zum Signalfluss gerichtet ist und somit erreicht wird, dass allein der Abtasttakt (104) des Digital-Analog-Umsetzers (205) und das Umsetzungsverhältnis des Abtastratenumsetzers (203) den Datendurchsatz des Sendepfads bestimmen.

10. Vorrichtung nach Anspruch 1,
**dadurch gekennzeichnet, dass**
- das Umsetzungsverhältnis des Abtastratenumsetzers (203) veränderbar oder programmierbar ist.

11. Vorrichtung nach Anspruch 3,
**dadurch gekennzeichnet, dass**
- der physikalische Arbeitstakt (103) ein ganzzahliges Vielfaches des physikalischen Abtasttakts (104) ist.

12. Vorrichtung nach Anspruch 1,
**dadurch gekennzeichnet, dass**
- zwischen Abtastratenumsetzer (203) und Digital-Analog-Umsetzer (205) ein Interpolator (204) mit ganzzahligem Interpolationsfaktor zwischengeschaltet ist.

13. Vorrichtung nach den Ansprüchen 11 und 12,
**dadurch gekennzeichnet, dass**
- der Interpolationsfaktor identisch mit dem Multiplexfaktor ist, mit dem die Schaltungskomponenten des Abtastratenumsetzers (203) und der vor ihm angeordneten Einrichtungen betrieben wird.

14. Vorrichtung nach Anspruch 1,
**dadurch gekennzeichnet, dass**
- in den Mobilfunkstandards die Standards UMTS und GSM/EDGE enthalten sind.

15. Vorrichtung nach Anspruch 3,
**dadurch gekennzeichnet, dass**
- der physikalische Arbeitstakt aus der GSM/EDGE-typischen Systemfrequenz von 13 MHz abgeleitet wird, insbesondere dass er 65 MHz = 5 x 13 MHz oder 62,4 MHz = 192/40 x 13 MHz beträgt.

16. Vorrichtung nach Anspruch 1,
**dadurch gekennzeichnet, dass**
- das Umsetzungsverhältnis des Abtastratenumsetzers (203) von Eingangsrate zu Ausgangsrate 64/65 oder 1.536/1.625 beträgt.

17. Verfahren zur Taktsteuerung von Sendesignal-Verarbeitungseinrichtungen in Mobilfunk-Endeinrichtungen, welches zu einer Mehrzahl verschiedener Mobilfunkstandards kompatibel ist, wobei
- Abtastwerte (213), die einem virtuellen Abtastraster zugehörig sind, mittels eines Abtastratenumsetzers (203) in Abtastwerte (215) eines physikalischen Abtastrasters für eine Digital-Analog-Umsetzung (205) oder eines ganzzahligen Teiles davon umgesetzt werden und,
- ein erstes Steuersignal (106) erzeugt wird, **dadurch gekennzeichnet, dass** bei einem aktivierten ersten Steuersignal auf Basis des physikalischen Abtastraters (106) ein zweites Steuersignal (107) für einen Modulator (202) erzeugt wird, und
- in Abhängigkeit von dem zweiten Steuersignal (107) von dem Modulator (202) ein dem virtuellen Abtastraster zugehöriger Abtastwert (213) bereitgestellt wird und damit der Abtastratenumsetzer (203) gespeist wird wobei
- das erste Steuersignal (106) von dem Abtastratenumsetzer (203) derart erzeugt wird, dass das zweite Steuersignal (107) im Mittel eine Flankenhäufigkeit besitzt, die der virtuellen Abtastfrequenz oder einem ganzzahligen Vielfachen der virtuellen Abtastfrequenz entspricht, und wobei das erste Steuersignal (106) deaktiviert wird, nachdem ein weiterer Ausgangswert (215) erreichnet werden muss und zwischen zwei aufeinender folgenden Takten des physikalischen Abtastrasters kein Rasterpunkt (313) des virtuellen Abtastraters liegt.

18. Verfahren nach Anspruch 17,
**dadurch gekennzeichnet, dass**
- von einer Systemtaktquelle (100) mit genau einem Systemtaktoszillator ein Systemtakt erzeugt wird.

19. Verfahren nach Anspruch 18,
**dadurch gekennzeichnet, dass**
- die Systemtaktquelle (100) einen physikalischen Arbeitstakt (103) für die Signalverarbeitungskomponenten sowie einen physikalischen Abtasttakt (104) für die Digital-Analog-Umsetzung (205) liefert

20. Verfahren nach Anspruch 19,
**dadurch gekennzeichnet, dass**
- der physikalische Arbeitstakt (103) identisch mit dem physikalischen Abtasttakt (104) ist.

21. Verfahren nach Anspruch 19,
**dadurch gekennzeichnet, dass**
- das Zeitraster des physikalischen Abtasttaktes (104) für die Digital-Analog-Umsetzung (205) und/oder das Zeitraster des Systemtaktes und/oder das Zeitraster des physikalischen Arbeitstaktes (103) unabhängig vom Abtastraster für die standardspezifische digitale Signalverarbeitung wählbar ist.

22. Verfahren nach Anspruch 17,
**dadurch gekennzeichnet, dass**
- das zweite Steuersignal (107) aus dem physikalischen Arbeitstakt (103) abgeleitet wird und synchrone Flanken zu diesem aufweist.

23. Verfahren nach Anspruch 22,
**dadurch gekennzeichnet, dass**
- das zweite Steuersignal (107) **dadurch** erzeugt wird, indem Flanken aus dem physikalischen Arbeitstakt (103) durch eine logische UND-Verknüpfung von physikalischem Arbeitstakt (103) und erstem Steuersignal (106) ausgeblendet werden.

24. Verfahren nach Anspruch 17,
**dadurch gekennzeichnet, dass**
- das zweite Steuersignal (107) als Arbeitstakt für Schaltungskomponenten verwendet wird, welche vor einem für die Umsetzung der Abtastwerte verwendeten Abtastratenumsetzer (203) angeordnet sind.

25. Verfahren nach Anspruch 17,
**dadurch gekennzeichnet , dass**
- der den Datendurchsatz bestimmende Steuersignalfluss entgegengesetzt zum Signalfluss gerichtet ist und somit erreicht wird, dass allein der Abtasttakt (104) zur Digital-Analog-Umsetzung (205) und das Umsetzungsverhältnis bei der Abtastratenumsetzung den Datendurchsatz des Sendepfads bestimmen.

26. Verfahren nach Anspruch 17,
**dadurch gekennzeichnet, dass**
- das Umsetzungsverhältnis bei der Abtastratenumsetzung veränderbar oder programmierbar ist.

27. Verfahren nach Anspruch 19,
**dadurch gekennzeichnet , dass**
- der physikalische Arbeitstakt (103) ein ganzzahliges Vielfaches des physikalischen Abtasttaktes (104) ist.

28. Verfahren nach Anspruch 17,
**dadurch gekennzeichnet, dass**
- zwischen der Umsetzung der Abtastraten mittels eines Abtastratenumsetzers (203) und der Digital-Analog-Umsetzung (205) eine Interpolation (204) mit ganzzahligem Interpolationsfaktor stattfindet.

29. Verfahren nach den Ansprüchen 27 und 28,
**dadurch gekennzeichnet, dass**
- der Interpolationsfaktor identisch mit dem Multiplexfaktor ist, mit dem die Schaltungskomponenten zur Abtastratenumsetzung (203) und der vor ihnen angeordneten Einrichtungen, insbesondere zur Modulation (202), betrieben werden.

30. Verfahren nach Anspruch 17,
**dadurch gekennzeichnet, dass**
- es für die Kombination der Standards UMTS und GSM/EDGE verwendet wird.

31. Verfahren nach Anspruch 19,
**dadurch gekennzeichnet, dass**
- der physikalische Arbeitstakt (103) aus der GSM/EDGE-typischen Systemfrequenz von 13 MHz abgeleitet wird, insbesondere dass er 65 MHz = 5 x 13 MHz oder 62,4 MHz x 192/40 x 13 MHz beträgt.

32. Verfahren nach Anspruch 17,
**dadurch gekennzeichnet, dass**
- das Umsetzungsverhältnis bei der Abtastratenumsetzung von Eingangsrate zur Ausgangsrate 64/65 oder 1.536/1.625 beträgt.

## Claims

1. Apparatus for clock control in transmission-signal processing devices in mobile radio terminal devices which is compatible with a plurality of different mobile radio standards,
having
- a sampling rate converter (203), a digital/analog converter (205), a clock control device (105) and a modulator (202) for outputting samples (213), where
- the sampling rate converter (203) converts samples (213) associated with a virtual sampling pattern into samples (215) of a physical sampling pattern from the digital/analog converter (205) or of an integer divisor thereof, and
- the sampling rate converter (203) outputs a first control signal (106), **characterized in that** with an activated first control signal (106) the clock control device (105) takes the physical sampling pattern as a basis for producing a second control signal (107) and supplies the second control signal (107) to the modulator (202), and
- the modulator (202) takes the second control signal (107) as a basis for outputting a sample (213) associated with the virtual sampling pattern and thus feeds the sampling rate converter (203), where
- the sampling rate converter (203) outputs the first control signal (106) such that the second control signal (107) has, on average, an edge repetition rate which corresponds to the virtual sampling frequency or to an integer multiple of the virtual sampling frequency, and where the sampling rate converter (203) deactivates the first control signal (106) after it establishes that it is necessary to calculate a further output value (215) and there is no pattern element (313) in the virtual sampling pattern situated between two successive clock cycles of the physical sampling pattern.

2. Apparatus according to claim 1,
**characterized in that**
- it has a system clock source (100) with a single system clock oscillator.

3. Apparatus according to claim 2,
**characterized in that**
- the system clock source (100) supplies a physical operating clock (103) for the signal processing components and also a physical sampling clock (104) for the digital/analog converter (205), particularly using a phase locked loop (PLL).

4. Apparatus according to claim 3,
**characterized in that**
- the physical operating clock (103) is identical to the physical sampling clock (104).

5. Apparatus according to claim 3,
**characterized in that**
- the time frame of the physical sampling clock (104) in the digital/analog converter (205) and/or the time frame of the system clock and/or the time frame of the physical operating clock (103) can be chosen independently of the sampling pattern for the standard-specific digital signal processing.

6. Apparatus according to claim 1,
**characterized in that**
- the second control signal (107) is derived from the physical operating clock (103) and has synchronous edges with respect thereto.

7. Apparatus according to claim 6,
**characterized in that**
- the second control signal (107) is generated by gating out edges from the physical operating clock (103) through logic ANDing of the physical operating clock (103) and the first control signal (106).

8. Apparatus according to claim 1,
**characterized in that**
- the second control signal (107) is used as the operating clock for the circuit components arranged upstream of the sampling rate converter (203).

9. Apparatus according to claim 1,
**characterized in that**
- the control signal flow determining the data throughput is in the opposite direction to the signal flow, the effect achieved by this being that solely the sampling clock (104) in the digital/analog converter (205) and the conversion ratio of the sampling rate converter (203) determine the data throughput of the transmission path.

10. Apparatus according to claim 1,
**characterized in that**
- the conversion ratio of the sampling rate converter (203) can be altered or programmed.

11. Apparatus according to claim 3,
**characterized in that**
- the physical operating clock (103) is an integer multiple of the physical sampling clock (104).

12. Apparatus according to claim 1,
**characterized in that**
- the sampling rate converter (203) and the digital/analog converter (205) have an interposed interpolator (204) with an integer interpolation factor.

13. Apparatus according to claims 11 and 12,
**characterized in that**
- the interpolation factor is identical to the multiplex factor which is used to operate the circuit components of the sampling rate converter (203) and of the devices arranged upstream thereof.

14. Apparatus according to claim 1,
**characterized in that**
- the mobile radio standards contain the UMTS and GSM/EDGE standards.

15. Apparatus according to claim 3,
**characterized in that**
- the physical operating clock is derived from the GSM/EDGE-typical system frequency of 13 MHz, particularly **in that** it is 65 MHz = 5 x 13 MHz or 62.4 MHz = 192/40 x 13 MHz.

16. Apparatus according to claim 1,
**characterized in that**
- the conversion ratio of the sampling rate converter (203) is 64/65 or 1.536/1.625 from the input rate to the output rate.

17. A method for clock control in transmission-signal processing devices in mobile radio terminal devices which is compatible with a plurality of different mobile radio standards, where
- samples (213) which are associated with a virtual sampling pattern are converted by means of a sampling rate converter (203) into samples (215) of a physical sampling pattern for digital/analog conversion (205) or of an integer divisor thereof, and
- a first control signal (106) is produced,
**characterized in that** with an activated first control signal (106) the physical sampling pattern is taken as a basis for producing a second control signal (107) for a modulator (202), and
- the modulator (202) takes the second control signal (107) as a basis for providing a sample (213) associated with the virtual sampling pattern and hence feeds the sampling rate converter (203), where
- the first control signal (106) is produced by the sampling rate converter (203) such that the second control signal (107) has, on average, an edge repetition rate which corresponds to the virtual sampling frequency or to an integer multiple of the virtual sampling frequency, and where the first control signal (106) is deactivated after it is necessary to calculate a further output value (215) and there is no pattern element (313) in the virtual sampling pattern situated between two successive clock cycles of the physical sampling pattern.

18. Method according to claim 17,
**characterized in that**
- a system clock source (100) with a single system clock oscillator generates a system clock.

19. Method according to claim 18,
**characterized in that**
- the system clock source (100) supplies a physical operating clock (103) for the signal processing components and also a physical sampling clock (104) for the digital/analog conversion (205).

20. Method according to claim 19,
**characterized in that**
- the physical operating clock (103) is identical to the physical sampling clock (104).

21. Method according to claim 19,
**characterized in that**
- the time frame of the physical sampling clock (104) for the digital/analog conversion (205) and/or the time frame of the system clock and/or the time frame of the physical operating clock (103) can be chosen independently of the sampling pattern for the standard-specific digital signal processing.

22. Method according to claim 17,
**characterized in that**
- the second clock signal (107) is derived from the physical operating clock (103) and has synchronous edges with respect thereto.

23. Method according to claim 22,
**characterized in that**
- the second clock signal (107) is generated by virtue of edges being gated out from the physical operating clock (103) through logic ANDing of the physical operating clock (103) and the first control signal (106).

24. Method according to claim 17,
**characterized in that**
- the second clock signal (107) is used as the operating clock for circuit components which are arranged upstream of a sampling rate converter (203) used for converting the samples.

25. Method according to claim 17,
**characterized in that**
- the control signal flow determining the data throughput is in the opposite direction to the signal flow, the effect achieved by this being that solely the sampling clock (104) for the digital/analog conversion (205) and the conversion ratio for the sampling rate conversion determine the data throughput of the transmission path.

26. Method according to claim 17,
**characterized in that**
- the conversion ratio for the sampling rate conversion can be altered or programmed.

27. Method according to claim 19,
**characterized in that**
- the physical operating clock (103) is an integer multiple of the physical sampling clock (104).

28. Method according to claim 17,
**characterized in that**
- interpolation (204) using an integer interpolation factor takes place between the conversion of the sampling rates using a sampling rate converter (203) and the digital/analog conversion (205).

29. Method according to claims 27 and 28,
**characterized in that**
- the interpolation factor is identical to the multiplex factor which is used to operate the circuit components for sampling rate conversion (203) and the devices arranged upstream thereof, particularly for the modulation (202).

30. Method according to claim 17,
**characterized in that**
- it is used for the combination of the UMTS and GSM/EDGE standards.

31. Method according to claim 19,
**characterized in that**
- the physical operating clock (103) is derived from the GSM/EDGE-typical system frequency of 13 MHz, particularly **in that** it is 65 MHz = 5 x 13 MHz or 62.4 MHz x 192/40 x 13 MHz.

32. Method according to claim 17,
**characterized in that**
- the conversion ratio for the sampling rate conversion is 64/65 or 1.536/1.625 from the input rate to the output rate.

## Revendications

1. Dispositif de commande d'horloge de dispositifs de traitement de signal d'émission dans des terminaux de téléphonie mobile, qui sont compatibles avec une pluralité de normes de téléphonie mobile différentes, ledit dispositif comportant
- un convertisseur de fréquence d'échantillonnage (203), un convertisseur numérique/analogique (205), un dispositif de commande d'horloge (105) et un modulateur (202) destiné à délivrer des valeurs d'échantillonnage (213),
- le convertisseur de fréquence d'échantillonnage (203) convertissant des valeurs d'échantillonnage (213), qui sont associées à une trame d'échantillonnage virtuelle, en des valeurs d'échantillonnage (215) d'une trame d'échantillonnage physique du convertisseur numérique/analogique (205) ou d'un diviseur entier de celle-ci, et
- le convertisseur de fréquence d'échantillonnage (203) délivrant un premier signal de commande (106), **caractérisé en ce que** le dispositif de commande d'horloge (105) génère, lorsqu'un premier signal de commande (106) est activé, un deuxième signal de commande (107) en se fondant sur la trame d'échantillonnage physique et le deuxième signal de commande (107) est amené au modulateur (202), et
- le modulateur (202) délivre en fonction du deuxième signal de commande (107) une valeur d'échantillonnage (213) associée à la trame d'échantillonnage virtuelle et l'applique ainsi au convertisseur d'échantillonnage (203),
- le convertisseur de fréquence d'échantillonnage (203) délivrant un premier signal de commande (106) de telle sorte que le deuxième signal de commande (107) possède en moyenne une fréquence d'impulsions qui correspond à la fréquence d'échantillonnage virtuelle ou à un multiple entier de la fréquence d'échantillonnage virtuelle, et le convertisseur de fréquence d'échantillonnage (203) désactivant le premier signal de commande (106), après avoir déterminé qu'une autre valeur de sortie (215) doit être calculée et que aucun point de trame (313) de la trame d'échantillonnage virtuelle ne se trouve entre deux impulsions d'horloge successives de la trame d'échantillonnage physique.

2. Dispositif selon la revendication 1, **caractérisée en ce que**
- il possède une source de fréquence d'horloge de système (100) comportant un seul oscillateur de fréquence d'horloge de système.

3. Dispositif selon la revendication 2, **caractérisé en ce que**
- la source de fréquence d'horloge de système (100) délivre une fréquence d'horloge de travail physique (103) pour les composants de traitement de signal ainsi qu'une fréquence d'échantillonnage physique (104) pour le convertisseur numérique/analogique (205), notamment en utilisant une boucle à verrouillage de phase (PPL).

4. Dispositif selon la revendication 3, **caractérisé en ce que**
- la fréquence d'horloge de travail physique (103) est identique à la fréquence d'échantillonnage physique (104).

5. Dispositif selon la revendication 3, **caractérisé en ce que**
- la trame temporelle de la fréquence d'échantillonnage physique (104) du convertisseur numérique/analogique (205) et/ou la trame temporelle de la fréquence d'horloge de système et/ou la trame temporelle de la fréquence d'horloge de travail physique (103) peuvent être choisies indépendamment de la trame d'échantillonnage pour le traitement de signal numérique spécifique à la norme.

6. Dispositif selon la revendication 1, **caractérisé en ce que**
- le deuxième signal de commande (107) est déduit de la fréquence de travail physique (103) et comporte des fronts synchrones à cette fréquence de travail.

7. Dispositif selon la revendication 6, **caractérisé en ce que**
- le deuxième signal de commande (107) est généré en extrayant des fronts de la fréquence de travail physique (103) par une combinaison logique ET de la fréquence de travail physique (103) et d'un premier signal de commande (106).

8. Dispositif selon la revendication 1, **caractérisé en ce que**
- le deuxième signal de commande (107) est utilisé comme fréquence de travail pour les composants de circuits qui sont disposés en amont du convertisseur de fréquence d'échantillonnage (203).

9. Dispositif selon la revendication 1, **caractérisé en ce que**
- le flux de signal de commande définissant le débit de données est orienté dans le sens opposé au flux de signal et est obtenu de façon que seule la fréquence d'échantillonnage (104) du convertisseur numérique/analogique (205) et le rapport de conversion du convertisseur d'échantillonnage (203) déterminent le débit de donnée de la voie d'émission.

10. Dispositif selon la revendication 1, **caractérisé en ce que**
- le rapport de conversion du convertisseur d'échantillonnage (203) est modifiable ou programmable.

11. Dispositif selon la revendication 3, **caractérisé en ce que**
- la fréquence de travail physique (103) est un multiple entier de la fréquence d'échantillonnage physique (104).

12. Dispositif selon la revendication 1, **caractérisé en ce que**
- un interpolateur (204) présentant un ² d'interpolation entier est monté entre le convertisseur de fréquence d'échantillonnage (203) et le convertisseur numérique/analogique (205).

13. Dispositif selon les revendications 11 et 12, **caractérisé en ce que**
- le facteur d'interpolation est identique au facteur de multiplexage des composants de circuit du convertisseur de fréquence d'échantillonnage (203) et des circuits situés en amont de celui-ci.

14. Dispositif selon la revendication 1, **caractérisé en ce que**
- les normes UMTS et GSM/EDGE sont contenues dans les normes de téléphonie mobile.

15. Dispositif selon la revendication 3, **caractérisé en ce que**
- la fréquence de travail physique est déduite de la fréquence de système de 13 MHz typique de GSM/EDGE, notamment qu'elle est de 65 MHz = 5 x 13 MHz ou de 62,4 MHz = 192/40 x 13 MHz.

16. Dispositif selon la revendication 1, **caractérisé en ce que**
- le rapport de conversion du convertisseur de fréquence d'échantillonnage (203) de la fréquence d'entrée sur la fréquence de sortie est de 64/65 ou de 1 536/1 625.

17. Procédé de commande d'horloge de dispositifs de traitement de signal d'émission dans des terminaux de téléphonie mobile, lequel procédé est compatible avec une pluralité de normes de téléphonie mobile différentes, dans lequel
- des valeurs d'échantillonnage (213), qui sont associées à une trame d'échantillonnage virtuelle, sont converties au moyen d'un convertisseur de fréquence d'échantillonnage (203) en des valeurs d'échantillonnage (215) d'une trame d'échantillonnage physique destinée à une conversion numérique/analogique (205) ou d'un diviseur entier de celle-ci, et
- un premier signal de commande (106) est généré, **caractérisé en ce que**, lorsqu'un premier signal de commande (106) est activé, un deuxième signal de commande destiné à un modulateur (202) est généré en se fondant sur la trame d'échantillonnage physique,
- une valeur d'échantillonnage (213), associée à la trame d'échantillonnage virtuelle, est délivrée par le modulateur (202) en fonction du deuxième signal de commande (107),
- le premier signal de commande (106) est généré par le convertisseur de fréquence d'échantillonnage (203) de telle sorte que le deuxième signal de commande (107) possède en moyenne une fréquence d'impulsions qui correspond à la fréquence d'échantillonnage virtuelle ou à un multiple entier de la fréquence d'échantillonnage virtuelle, et le premier signal de commande (106) étant désactivé après avoir déterminé qu'une autre valeur de sortie (215) doit être calculée et que aucun point de trame (313) de la trame d'échantillonnage virtuelle ne se trouve entre deux impulsions d'horloge successives de la trame d'échantillonnage physique.

18. Procédé selon la revendication 17, **caractérisé en ce qu'**une fréquence d'horloge de système est générée par une source de fréquence d'horloge de système (100) comportant un seul oscillateur de fréquence d'horloge de système.

19. Procédé selon la revendication 18, **caractérisé en ce que**
- la source de fréquence d'horloge de système (100) délivre une fréquence d'horloge de travail physique (103) pour les composants de traitement de signal ainsi qu'une fréquence d'échantillonnage physique (104) pour le convertisseur numérique/analogique (205).

20. Procédé selon la revendication 19, **caractérisé en ce que**
- la fréquence de travail physique (103) est identique à la fréquence d'échantillonnage (104).

21. Procédé selon la revendication 19, **caractérisé en ce que**
- la trame temporelle de la fréquence d'échantillonnage physique (104) destinée à la conversion numérique/analogique (205) et/ou la trame temporelle de la fréquence d'horloge de système et/ou la trame temporelle de la fréquence de travail physique (103) peuvent être choisies indépendamment de la trame d'échantillonnage pour le traitement de signal numérique spécifique à la norme.

22. Procédé selon la revendication 17, **caractérisé en ce que**
- le deuxième signal de commande (107) est déduit de la fréquence de travail physique (103) et comporte des fronts synchrones à celle-ci.

23. Procédé selon la revendication 22, **caractérisé en ce que**
- le deuxième signal de commande (107) est généré en extrayant des fronts de la fréquence de travail physique (103) par une combinaison logique ET de la fréquence de travail physique (103) et d'un premier signal de commande (106).

24. Procédé selon la revendication 17, **caractérisé en ce que**
- le deuxième signal de commande (107) est utilisé comme fréquence de travail pour les composants de circuits qui sont disposés en amont du convertisseur de fréquence d'échantillonnage (203).

25. Procédé selon la revendication 17, **caractérisé en ce que**
- le flux de signal de commande définissant le débit de données est orienté dans le sens opposé au flux de signal et est obtenu de façon que seule la fréquence d'échantillonnage (104) du convertisseur numérique/analogique (205) et le rapport de conversion du convertisseur d'échantillonnage (203) déterminent le débit de donnée de la voie d'émission.

26. Procédé selon la revendication 17, **caractérisé en ce que**
- le rapport de conversion utilisé lors de la conversion d'échantillonnage est modifiable ou programmable.

27. Procédé selon la revendication 19, **caractérisé en ce que**
- la fréquence de travail physique (103) est un multiple entier de la fréquence d'échantillonnage physique (104).

28. Procédé selon la revendication 17, **caractérisé en ce que**
- une interpolation (204) avec un facteur d'interpolation entier est effectuée entre la conversion des fréquences d'échantillonnage au moyen d'un convertisseur de fréquence d'échantillonnage (203) et la conversion numérique/analogique (205).

29. Procédé selon l'une des revendications 27 et 28,
**caractérisé en ce que**
- le facteur d'interpolation est identique au facteur de multiplexage des composants de circuit du convertisseur de fréquence d'échantillonnage (203) et des circuits situés en amont de celui-ci.

30. Procédé selon la revendication 17, **caractérisé en ce que**
- il est utilisé pour la combinaison des normes UMTS et GSM/EDGE.

31. Procédé selon la revendication 19, **caractérisé en ce que**
- la fréquence de travail physique (103) est déduite de la fréquence de système de 13 MHz typique de GSM/EDGE, notamment en ce qu'elle est de 65 MHz = 5 x 13 MHz ou de 62,4 MHz = 192/40 x 13 MHz.

32. Procédé selon la revendication 17, **caractérisé en ce que**
- le rapport de conversion utilisé lors la conversion de fréquence d'échantillonnage de la fréquence d'entrée sur la fréquence de sortie est de 64/65 ou de 1 536/1 625.
